# EUROPÄISCHE PATENTANMELDUNG

(11) **EP 2 292 455 A1**
(43) Veröffentlichungstag der Anmeldung: **09.03.2011**
(21) Anmeldenummer: 10008636.2
(22) Anmeldetag: 19.08.2010
(51) Int. Cl.: B60H 1/22, F24H 3/04, H05B 3/50

(54) **Luftheizer**

(30) Priorität: 03.09.2009 DE 102009040023
(71) Anmelder: BorgWarner BERU Systems GmbH, 71636 Ludwigsburg (DE)
(72) Erfinder: Herrmann, Mario, 76877 Offenbach (DE)
(74) Vertreter: Mommer, Niels

(57) **Zusammenfassung**

Beschrieben wird ein Luftheizer für Automobile mit wenigstens einem Gehäuse (3), in dem wenigstens ein elektrisches Heizelement angeordnet ist, und wenigstens einem mit dem Gehäuse (3) verbundenen Wärmeübertrager, der von einem zu erwärmenden Luftstrom durchströmbar ist. Erfindungsgemäß ist vorgesehen, dass der Wärmeübertrager an einer dem Luftstrom ausgesetzten Außenseite eine Lackschicht (8) trägt.

## Beschreibung

Die Erfindung geht aus von einem elektrischen Luftheizer mit den im Oberbegriff des Anspruchs 1 angegebenen Merkmalen. Ein derartiger Luftheizer ist beispielsweise aus der WO 2007/071335 A1 zur Beheizung des Innenraums eines Fahrzeugs bekannt.

Aufgabe der Erfindung ist es, einen Weg aufzuzeigen, wie von dem oder den elektrischen Heizelementen erzeugte Wärme über einen Wärmeübertrager noch effizienter an einen zu erwärmenden Luftstrom abgegeben werden kann.

Diese Aufgabe wird durch einen Luftheizer mit den im Anspruch 1 angegebenen Merkmalen gelöst. Vorteilhafte Weiterbildungen der Erfindung sind Gegenstand von Unteransprüchen.

Bei einem erfindungsgemäßen Luftheizer trägt der Wärmeübertrager an einer dem Luftstrom ausgesetzten Außenseite eine Lackschicht. Überraschender Weise lässt sich durch diese einfache Maßnahme die Effizienz der Wärmeabgabe signifikant steigern.

Bevorzugt ist die Lackschicht aus einem Siliconharzlack. Geeignet sind insbesondere Siliconharzlacke auf Basis von Methylsilicon und / oder Phenylsilicon. Siliconharzlacke auf Basis von Methylsilicon können vorteilhaft flüssig aufgetragen werden. Siliconharzlacke auf Basis von Phenylsilicon werden bevorzugt als Pulverbeschichtung aufgebracht und dann eingebrannt.

Eine vorteilhafte Weiterbildung der Erfindung sieht vor, dass der Wärmeübertrager eine Anströmfläche aufweist, welche von der Lackschicht bedeckt ist und sich quer zu einer Anströmrichtung eines zu erwärmenden Luftstroms erstreckt. Überraschender Weise konnte nämlich bei Messungen festgestellt werden, dass die Verbesserung der Wärmeabgabe umso ausgeprägter ist, je größer die Anströmfläche ist. Eine Lackschicht auf parallel zur Strömungsrichtung verlaufenden Flächen des Wärmetauschers scheint demgegenüber von untergeordneter Bedeutung zu sein. Bevorzugt ist dabei, dass die Anströmfläche durchströmbare Öffnungen aufweist. Möglich ist es aber auch, Anströmflächen ohne Öffnungen zu verwenden, die beispielsweise einen mäanderförmigen Strömungsverlauf vorgeben.

Weitere Einzelheiten und Vorteile der Erfindung werden an einem Ausführungsbeispiel unter Bezugnahme auf die beigefügten Zeichnungen erläutert. Es zeigen:
Figur 1 ein Ausführungsbeispiel eines erfindungsgemäßen Luftheizers;
Figur 2 eine Seitenansicht zu Figur 1.

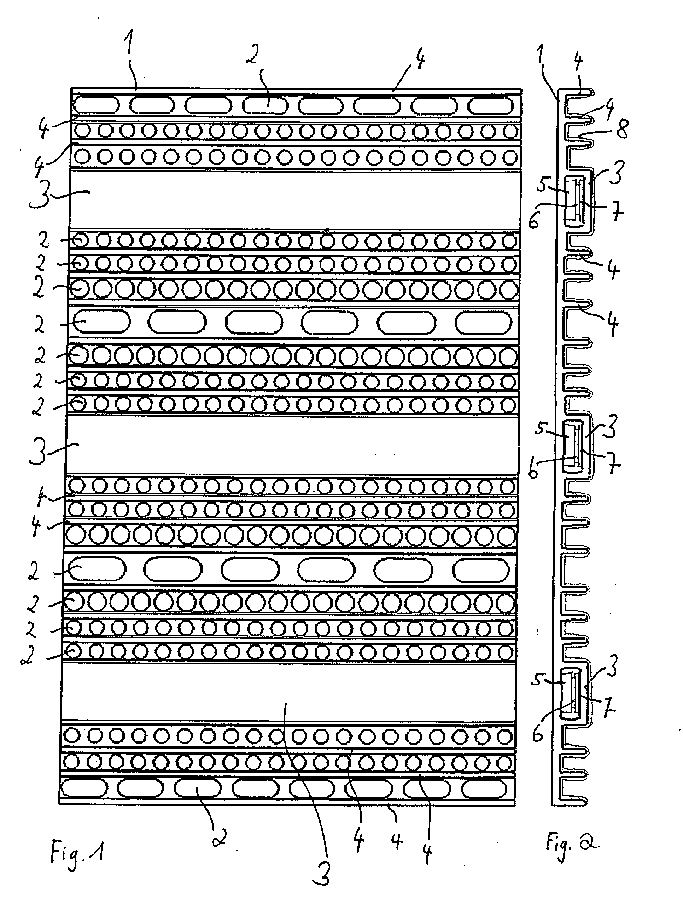

Die in den Figuren 1 und 2 gezeigte Heizvorrichtung weist ein Strangpressprofil 1 auf, das elektrische Heizelemente enthaltende Rohrgehäuse 3 und einen Wärmeübertrager bildet, der quer zur Strangpressrichtung verlaufende Öffnungen 2 aufweist, die von einem zu erwärmenden Luftstrom durchströmbar sind. Das Strangpressprofil 1 ist beispielsweise aus Aluminium und weist mehrere, bei dem dargestellten Ausführungsbeispiel drei, in Strangpressrichtung verlaufende Vierkantrohre 3 sowie parallel zu den Vierkantrohren 3 verlaufende Wärmeabgaberippen 4 auf.

Die Vierkantrohre 3 bilden Rohrgehäuse, in denen jeweils mehrere plattenförmige Heizelemente 5 aus einer PTC-Keramik, beispielsweise auf Basis von Bariumtitanat, angeordnet und zwischen den Innenseiten des Rohres verpresst sind. Die PTC-Heizelemente 5 liegen bei dem dargestellten Ausführungsbeispiel an einer Innenseite des Rohrgehäuses und an einem Kontaktblech 6 an, das beispielsweise als Kontaktzunge aus dem Vierkantrohr herausragen kann und diesem gegenüber durch eine Isolierschicht 7, beispielsweise aus Aluminiumoxid, elektrisch isoliert ist. Die Heizelemente können aber auch elektrisch gegenüber dem Rohrgehäuse isoliert sein, indem diese zwischen zwei Kontaktblechen 6 angeordnet sind, die jeweils durch eine Isolierschicht 7 gegenüber dem Rohrgehäuse isoliert sind.

Der von dem Strangpressprofil 1 gebildete Wärmeübertrager trägt an einer dem Luftstrom ausgesetzten Außenseite eine in Figur 2 schematisch, stark vergrößert dargestellte Lackschicht 8, welche die Wärmeabgaberippen 4 und dazwischen liegende Flächen bedeckt. Die Lackschicht 8 ist aus einem Siliconharzlack. Geeignet sind Siliconharzlacke auf Basis von Methylsilicon und / oder Phenylsilicon. Siliconharzlacke auf Basis von Methylsilicon können flüssig auf den Wärmeübertrager aufgebracht werden. Siliconharzlacke auf Basis von Phenylsilicon werden bevorzugt als Pulverschicht aufgebracht und anschließend eingebrannt.

Die Lackschicht 8 ist bevorzugt wenigstens 10µm dick, beispielsweise 20 bis 50 µm dick. Die Lackschicht 8 bedeckt eine gebeizte Metallfläche des Wärmeübertragers. Indem die Oberfläche des Wärmeübertragers vor dem Aufbringen der Lackschicht 8 gebeizt wird, können Oxidschichten entfernt und die Haftung der Lackschicht 8 verbessert werden.

Bei dem dargestellten Ausführungsbeispiel bedeckt die Lackschicht 8 nur die angeströmte Vorderseite des Wärmeübertragers, während dessen Rückseite nicht lackiert ist. Der Wärmeübertrager kann aber auch allseitig lackiert sein.

Bei dem dargestellten Ausführungsbeispiel bildet die lackierte Vorderseite des Wärmeübertragers eine Anströmfläche, über die Wärme an den Luftstrom abgegeben wird. Allgemein ist bevorzugt, dass die Anströmfläche mindestens so groß wie eine Wand eines Gehäuses, in dem ein oder mehrere Heizelemente angeordnet sind, ist. Dabei kann die Anströmfläche auch selbst eine Gehäusewand bilden bzw. enthalten, wie dies bei dem dargestellten Ausführungsbeispiel der Fall ist.

Der dargestellte Luftheizer dient zum Beheizen des Innenraums eines Kraftfahrzeugs.

**Bezugszahlen**
- 1: Strangpressprofil
- 2: Öffnungen
- 3: Vierkantrohre
- 4: Wärmeabgaberippen
- 5: Heizelemente
- 6: Kontaktblech
- 7: Isolierschicht
- 8: Lackschicht

## Patentansprüche

1. Luftheizer für Automobile mit
wenigstens einem Gehäuse (3), in dem wenigstens ein elektrisches Heizelement angeordnet ist, und
wenigstens einem mit dem Gehäuse (3) verbundenen Wärmeübertrager, der von einem zu erwärmenden Luftstrom durchströmbar ist,
**dadurch gekennzeichnet, dass** der Wärmeübertrager an einer dem Luftstrom ausgesetzten Außenseite eine Lackschicht (8) trägt.

2. Luftheizer nach Anspruch 1, **dadurch gekennzeichnet, das** die Lackschicht (8) aus einem Siliconharzlack ist.

3. Luftheizer nach Anspruch 2, **dadurch gekennzeichnet, dass** der Siliconharzlack ein Lack auf Basis von Methylsilicon und / oder Phenylsilicon ist.

4. Luftheizer nach einem der vorstehenden Ansprüche, **dadurch gekennzeichnet, dass** die Lackschicht (8) wenigstens 10 µm dick ist.

5. Luftheizer nach einem der vorstehenden Ansprüche, **dadurch gekennzeichnet, dass** die Lackschicht (8) 20 bis 50 µm dick ist.

6. Luftheizer nach einem der vorstehenden Ansprüche, **dadurch gekennzeichnet, dass** die Lackschicht (8) eine gebeizte Metallfläche bedeckt.

7. Luftheizer nach einem der vorstehenden Ansprüche, **dadurch gekennzeichnet, dass** der Wärmeübertrager eine von der Lackschicht (8) bedeckte Anströmfläche aufweist, die sich quer zur Strömungsrichtung eines zu erwärmenden Luftstroms erstreckt.

8. Luftheizer nach Anspruch 7, **dadurch gekennzeichnet, dass** die Anströmfläche mindestens so groß wie eine Wand des Gehäuses (3) ist oder eine Gehäusewand bildet.

9. Luftheizer nach Anspruch 7 oder 8, **dadurch gekennzeichnet, dass** die Anströmfläche durchströmbare Öffnungen (2) aufweist.

10. Luftheizer nach einem der vorstehenden Ansprüche, **dadurch gekennzeichnet, dass** der Wärmeübertrager von der Lackschicht (8) bedeckte Wärmeabgaberippen (4) aufweist.

11. Luftheizer nach einem der vorstehenden Ansprüche, **dadurch gekennzeichnet, dass** das Gehäuse (3) ein Rohrgehäuse ist.

12. Luftheizer nach Anspruch 11, **gekennzeichnet durch** ein Strangpressprofil (1), das sowohl wenigstens ein Rohrgehäuse (3) für die Heizelemente (5) als wenigstens einen Wärmeübertrager bildet.

13. Luftheizer nach Anspruch 12, **dadurch gekennzeichnet, dass** das Strangpressprofil (1) quer zur Strangpressrichtung durchströmbare Öffnungen (2) aufweist.

14. Verwendung eines Luftheizers nach einem der vorstehenden Ansprüche zum Beheizen des Innenraums eines Fahrzeugs.
